# FASCICULE DE BREVET EUROPEEN

(11) **EP 3 021 273 B1**
(45) Date de publication et mention de la délivrance du brevet: **29.01.2025**
(21) Numéro de dépôt: 15194524.3
(22) Date de dépôt: 13.11.2015
(51) Int. Cl.: G06Q 20/02, H04W 12/02, G06Q 20/38, G06Q 20/08, G06Q 20/32

(54) **PROCÉDÉ DE SÉCURISATION D'UNE TRANSACTION ENTRE UN TERMINAL MOBILE ET UN SERVEUR D'UN FOURNISSEUR DE SERVICE PAR L'INTERMÉDIAIRE D'UNE PLATEFORME**
SICHERUNGSVERFAHREN EINER TRANSAKTION ZWISCHEN EINEM MOBILEN ENDGERÄT UND EINEM SERVER EINES DIENST-PROVIDERS ÜBER EINE PLATTFORM
METHOD FOR SECURING A TRANSACTION BETWEEN A MOBILE TERMINAL AND A SERVER OF A SERVICE PROVIDER VIA A PLATFORM

(30) Priorité: 14.11.2014 FR 1460995
(43) Date de publication de la demande: 18.05.2016
(73) Titulaire: Orange, 92130 Issy-les-Moulineaux (FR)
(72) Inventeur: KIRSCHBAUM, Patrick, 78125 POIGNY LA FORET (FR); BRUN, Arnaud, 92100 BOULOGNE BILLANCOURT (FR)
(74) Mandataire: Regimbeau

(56) Documents cités:
- WO-A1-01/26061
- WO-A1-2009/112793
- WO-A1-2012/168457
- US-A1- 2006 235 761
- US-A1- 2009 254 440
- US-A1- 2011 099 037
- US-A1- 2013 150 000

## Description

### DOMAINE TECHNIQUE GENERAL

L'invention a pour objet la sécurisation des échanges de données entre un terminal mobile et un serveur.

Elle concerne plus particulièrement un procédé de sécurisation d'une transaction entre ce terminal et le serveur d'un fournisseur de service par l'intermédiaire d'une plateforme de services apte à être connectée à une plateforme d'accès au réseau internet d'un réseau mobile géré par un opérateur.

### ETAT DE LA TECHNIQUE

La fourniture de biens ou de services par un fournisseur de service à un client requiert bien souvent en échange la réalisation d'une transaction entre ce fournisseur de service et ce client. La plupart des fournisseurs de service proposent à leurs clients une solution de paiement sécurisé par carte bancaire afin de mettre en œuvre une telle transaction. Pour cela, un fournisseur de service doit disposer d'un terminal de paiement fixe dédié relié par le biais d'un réseau de communication à un serveur bancaire. Néanmoins, une telle solution peut ne pas être adaptée à certains fournisseurs de service, en particulier les fournisseurs de service itinérants tels que des ouvriers, artisans ou chauffeurs de taxi. De plus, l'utilisation d'une carte bancaire ne garantit ni l'anonymat de son utilisateur, le nom de celui-ci figurant sur la carte, ni la confidentialité de ses données bancaires, les informations figurant sur la carte pouvant permettre de réaliser un achat sur Internet sans connaître le code de carte bancaire associé.

Des solutions de paiement en ligne proposent un paiement dématérialisé et sécurisé ne nécessitant pas que le fournisseur de service détienne un terminal dédié. De telles solutions de paiement garantissent l'anonymat de l'utilisateur vis-à-vis du fournisseur de service. De plus, l'utilisation de la plateforme de la solution de paiement comme tiers de confiance permet de garantir la confidentialité des données bancaires de l'utilisateur de la solution qui ne sont pas transmises au fournisseur de service.

Néanmoins de telles solutions fonctionnent au travers du réseau Internet et requièrent de la part de l'utilisateur la saisie d'un identifiant et d'un mot de passe sur un terminal relié au réseau pour réaliser une transaction. De nombreuses techniques de piratage permettent à des pirates de prendre connaissance de cet identifiant et de ce mot de passe, pour ensuite usurper l'identité de l'utilisateur auprès de la solution de paiement et ordonner des transactions à l'insu de l'utilisateur. De tels pirates peuvent par exemple pour cela intercepter les communications entre l'utilisateur et le serveur de la solution de paiement, pirater ledit serveur ou encore installer un logiciel espion sur le terminal de l'utilisateur.

De plus, de telles solutions semblent peu adaptées à une utilisation dans une situation où ni le client ni le fournisseur de service ne peuvent disposer aisément d'un terminal fixe, comme à bord d'un taxi ou bien sur un stand de marché ou de brocante. L'utilisation de telles solutions de paiement nécessite en effet souvent la saisie de nombreuses données de la part de l'utilisateur telles que son identifiant, son mot de passe, un montant, un identifiant du fournisseur de service... Une transaction par le biais d'un tel service peut alors être difficile à mettre en œuvre par le biais d'un terminal mobile.

Il existe donc un besoin d'un procédé permettant de mettre en œuvre de manière sécurisée une transaction, par exemple une transaction bancaire ou un paiement, entre un utilisateur et un fournisseur de service, sans nécessiter l'emploi d'un terminal fixe ou dédié et sans requérir de la part de l'utilisateur la saisie de nombreuses données. Une telle sécurisation doit notamment garantir l'anonymat de l'utilisateur et la confidentialité de ses données bancaires vis-à-vis du fournisseur de service ou d'un éventuel pirate.

US2006235761A1 concerne un procédé permettant d'autoriser une transaction en ligne entre un acheteur et un commerçant. Le procédé consiste à fournir, par l'intermédiaire d'un fournisseur d'identité, une vérification de l'identité de l'acheteur. Le procédé consiste également à fournir, par l'intermédiaire d'un fournisseur de paiement, une vérification de la capacité de l'acheteur à payer la transaction, le fournisseur d'identité et le fournisseur de paiement étant des entités de réseau différentes. L'invention concerne également un système informatique qui peut effectuer une transaction en ligne entre un acheteur et un commerçant fournissant un ou plusieurs biens et/ou services. Le système informatique comprend un premier nœud configuré pour fournir une vérification de l'identité de l'acheteur, et un second nœud configuré pour fournir une vérification de la capacité de l'acheteur à payer la transaction, le premier nœud et le second nœud étant associés à des entités de réseau différentes.

### PRESENTATION DE L'INVENTION

La présente invention se rapporte ainsi selon un premier aspect à un procédé de sécurisation d'une transaction entre un terminal mobile d'un utilisateur par l'intermédiaire d'une plateforme connectée au terminal mobile via une plateforme d'accès au réseau internet d'un réseau mobile d'un opérateur, au serveur du fournisseur de service et à un système d'exécution de transactions telle que défini dans la revendication indépendante 1.

Dans ce procédé, la plateforme sert à la fois d'intermédiaire de communication, de terminal d'exécution de transaction et de tiers de confiance entre le terminal mobile de l'utilisateur, le serveur du fournisseur de services et le système d'exécution de transactions.

En tant que tiers de confiance, la plateforme sert au stockage de données confidentielles sur l'identité de l'utilisateur, comme par exemple la donnée d'alias et le code d'identification de cet utilisateur auprès du système d'exécution de transactions.

En tant qu'intermédiaire de communication, la plateforme permet une mise en relation anonymisée de l'utilisateur au travers de son terminal mobile avec le fournisseur de service dans laquelle l'utilisateur n'est connu du fournisseur de service qu'au travers de sa donnée d'alias. Cette mise en relation est effectuée de manière sécurisée via le réseau mobile, notamment en ce que c'est l'identifiant utilisateur, au moyen duquel le terminal mobile est identifié auprès du réseau mobile, qui permet de déterminer la donnée d'alias servant à la mise en relation avec le fournisseur de service. Ainsi, lorsque la plateforme est mise en œuvre par l'opérateur du réseau mobile et est donc reliée à l'infrastructure réseau de ce réseau mobile, seul cet opérateur de réseau mobile pourra déterminer la donnée d'alias permettant la mise en relation.

En tant que terminal d'exécution de transaction, la plateforme sert à la réception des données représentatives d'une transaction à exécuter et à la transmission d'un ordre d'exécution de transaction au système d'exécution de transaction. Dans le cas d'une transaction de paiement, la plateforme joue ainsi le rôle d'un terminal fixe de paiement. Ceci permet donc d'exécuter une transaction sans avoir besoin de déployer des terminaux de paiement dédiés sur chaque site géographique sur lequel l'utilisateur a besoin d'effectuer un paiement ou d'exécuter une transaction.

Un tel procédé permet ainsi de réaliser une transaction sécurisée entre l'utilisateur et le fournisseur de service sans que l'identité ni les codes d'identification auprès du système d'exécution de transaction de l'utilisateur du terminal mobile ne soient révélés au fournisseur de service.

L'étape de mémorisation d'une correspondance du procédé selon le premier aspect comprend la mémorisation d'une correspondance entre un identifiant du fournisseur de service et ledit code d'identification du fournisseur de service auprès du système d'exécution de transactions.

La plateforme mémorise ainsi les coordonnées bancaires du fournisseur de service afin de pouvoir ultérieurement les communiquer au système bancaire pour la mise en œuvre d'une transaction.

Les données de transaction peuvent comprendre un code de transaction qui identifie la transaction à exécuter auprès du fournisseur de service, une identification d'au moins un service ou produit à fournir par le fournisseur de service et/ou un montant de transaction.

Le procédé selon le premier aspect peut comprendre en outre les étapes suivantes :
- mémorisation d'un code d'authentification de l'utilisateur en association avec le code d'identification de l'utilisateur,
- transmission au terminal mobile d'une requête de saisie dudit code d'authentification,
- réception d'un code saisi par ledit utilisateur et comparaison du code saisi avec le code d'authentification mémorisé,
- transmission de l'ordre d'exécution de la transaction si le code saisi et le code d'authentification mémorisé sont identiques.

Dans un tel mode de mise en œuvre, la plateforme stocke une autre donnée confidentielle à savoir un code d'authentification de cet utilisateur et effectue la vérification de ce code d'authentification. La vérification d'un tel code d'authentification par la plateforme permet de se prémunir contre une usurpation d'identité par un pirate ayant dérobé le terminal mobile de l'utilisateur.

L'étape de réception de données de transaction du procédé selon le premier aspect peut comprendre :
- une réception en provenance du terminal mobile des données de transaction suite à une saisie desdites données de transaction effectuée au moyen dudit terminal mobile;
- une génération dudit ordre d'exécution de la transaction à partir desdites données de transaction reçues et de la donnée d'alias.

L'étape de réception de données de transaction peut comprendre une réception et une transmission au serveur du fournisseur de service du code de transaction suite à une saisie dudit code de transaction effectuée au moyen dudit terminal mobile.

Ce code de transaction sert de lien entre la transaction à mettre en œuvre et le terminal mobile de l'utilisateur par lequel se fait la validation la transaction. En particulier, il permet de réaliser une association entre l'alias et la transaction.

Ceci permet de transmettre au fournisseur de service le code de transaction et la donnée d'alias de l'utilisateur sans que le fournisseur de service et l'utilisateur ne soient en contact direct. Le fournisseur de service a ainsi connaissance de la volonté de l'utilisateur d'établir avec lui une transaction pour un montant correspondant au code de transaction et peut identifier le terminal mobile de l'utilisateur par sa donnée d'alias, tout en préservant l'anonymat de l'utilisateur.

Ledit code de transaction étant associé à un montant de la transaction, suite à la réception dudit code de transaction, l'étape de réception de données de transaction du procédé selon le premier aspect peut comprendre une mise en correspondance de la donnée d'alias de l'utilisateur du terminal mobile, du montant de la transaction et de l'identifiant dudit fournisseur de service ;

Une telle étape de mise en correspondance a pour but de définir la transaction, c'est-à-dire de relier : la donnée d'alias de l'utilisateur, identifiant le terminal mobile de l'utilisateur sans révéler son identité, l'identifiant du fournisseur de service, identifiant le fournisseur de service avec lequel l'utilisateur du terminal mobile veut conduire une transaction, et le montant de cette transaction.

Dans un premier mode de mise en œuvre, l'étape de mise en correspondance du procédé selon le premier aspect comprend en outre préalablement les étapes suivantes :
- détermination du montant de ladite transaction correspondant audit code de transaction reçu ;
- transmission au terminal mobile d'un message de demande de validation comprenant le montant de transaction déterminé ;
- réception d'un message de validation de transaction transmis par le terminal mobile, ledit message comprenant la donnée, le montant de ladite transaction et l'identifiant dudit fournisseur de service auprès de la plateforme ;
et dans lequel l'ordre d'exécution de la transaction est transmis au système d'exécution de transactions si le message de validation en provenance du terminal mobile est reçu par la plateforme.

L'utilisateur peut ainsi confirmer sa volonté d'engager une transaction avec ce fournisseur de service pour un tel montant et donner à la plateforme toutes les informations dont elle a besoin pour faire exécuter la transaction par le système d'exécution de transactions.

Dans un deuxième mode de mise en œuvre, l'étape de mise en correspondance du procédé selon le premier aspect comprend en outre préalablement la réception d'un message de requête de transaction transmis par le serveur du fournisseur de service, ledit message comprenant la donnée d'alias, un montant de ladite transaction et l'identifiant dudit fournisseur de service auprès de la plateforme;

La transaction peut ainsi être requise auprès de la plateforme directement par le fournisseur de service, sans requérir une intervention supplémentaire de l'utilisateur du terminal mobile, dès que le fournisseur de service sait quel terminal utilisateur, identifié par sa donnée d'alias, veut initier une transaction et pour quel montant.

Le code de transaction peut être un code associé temporairement par le serveur du fournisseur de service au montant de transaction ou un code identifiant un équipement susceptible de fournir le montant de transaction audit fournisseur de service.

L'identifiant utilisateur peut être un identifiant associé à un module d'identification d'utilisateur du terminal mobile.

Ceci permet de garantir que l'identifiant utilisateur employé identifie bien le terminal mobile de l'utilisateur.

La mise en relation du procédé selon le premier aspect peut être réalisée de manière sécurisée par l'intermédiaire d'un réseau privé virtuel (VPN) établi entre la plateforme et le serveur de fournisseur de service.

Ceci permet de renforcer la sécurité des échanges de données entre la plateforme et les fournisseurs de service, tout dispositif extérieur au réseau de l'opérateur tentant de se connecter à un serveur d'un fournisseur de service étant rejeté.

L'étape de mémorisation du procédé selon le premier aspect peut comprendre en outre préalablement une étape de réception d'un message d'inscription dudit fournisseur de service transmis par ledit serveur du fournisseur de service et comprenant le code d'identification du fournisseur de service.

Le fournisseur de service peut ainsi s'inscrire au service de transaction sécurisée auprès de la plateforme en lui fournissant ses données bancaires, pour ne pas avoir à lui transmettre à nouveau lors d'une transaction sécurisée. Le fournisseur de service peut ainsi faire partie des fournisseurs avec lesquels la plateforme peut proposer à un utilisateur d'initier une transaction.

L'étape de mémorisation du procédé selon le premier aspect peut comprendre en outre préalablement une étape de réception d'un message d'inscription de l'utilisateur du terminal mobile transmis par le terminal mobile et comprenant le code d'identification de l'utilisateur et optionnellement le code d'authentification de l'utilisateur.

L'utilisateur du terminal mobile peut ainsi s'inscrire au service de transaction sécurisée auprès de la plateforme en lui fournissant ses données bancaires, pour ne pas avoir à lui transmettre à nouveau lors d'une transaction sécurisée. L'utilisateur peut également optionnellement choisir lui-même son code d'authentification, afin par exemple qu'il lui soit plus facile de le mémoriser.

La présente invention se rapporte selon un deuxième aspect à un système comprenant un terminal mobile d'un utilisateur, un serveur d'un fournisseur de service, une plateforme servant d'intermédiaire entre le terminal mobile et le serveur et étant connectée au terminal mobile via une plateforme d'accès au réseau internet d'un réseau mobile d'un opérateur, le système étant configuré pour mettre en œuvre le procédé selon le premier aspect.

### PRESENTATION DES FIGURES

D'autres caractéristiques et avantages apparaîtront à la lecture de la description qui va suivre d'un mode de réalisation. Cette description sera donnée en référence aux dessins annexés dans lesquels :
- la figure 1 illustre schématiquement des moyens matériels pour une mise en œuvre possible pour l'invention ;
- la figure 2 illustre schématiquement des moyens matériels pour une mise en œuvre possible pour l'invention selon laquelle les communications utilisent le protocole HTTP ;
- la figure 3 illustre un exemple de transmission de l'alias et des coordonnées géographiques du terminal mobile à la plateforme ;
- les figures 4a, 4b, 4c, 4d illustrent un exemple d'accès par un utilisateur d'un terminal mobile à un service disponible avec saisie d'un code USSD selon un mode de mise en œuvre de l'invention ;
- la figure 5 est un diagramme schématisant un exemple de mise en œuvre d'une phase de mémorisation d'un procédé de sécurisation d'une transaction selon un mode de mise en œuvre de l'invention ;
- la figure 6 est un diagramme schématisant un exemple de mise en œuvre d'une phase de transaction d'un procédé de sécurisation d'une transaction selon un mode de mise en œuvre de l'invention ;
- les figures 7a, 7b, 7c, 7d illustrent des exemples d'affichage sur le terminal mobile de l'utilisateur pour la réalisation du procédé de sécurisation de transaction entre l'utilisateur du terminal mobile et un fournisseur de service selon un mode de mise en œuvre de l'invention.

### DESCRIPTION DETAILLEE

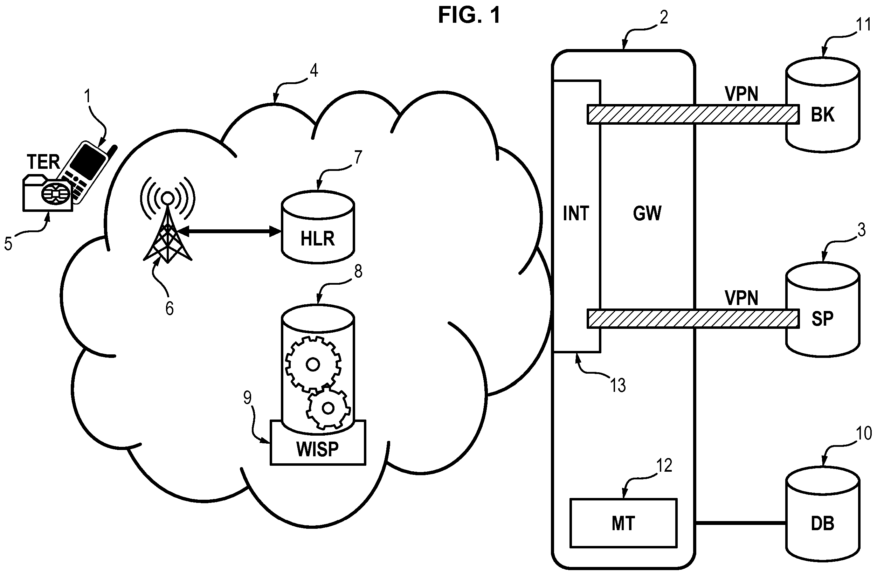

En référence à la **figure 1****,** une mise en œuvre pour l'invention concerne un procédé de sécurisation de transaction entre un terminal mobile 1 d'un utilisateur et un serveur 3 d'un fournisseur de service par l'intermédiaire d'une plate-forme 2 apte à être connectée au terminal mobile 1 via un réseau mobile 4 géré par un opérateur, au serveur 3 d'un fournisseur de service et à un système d'exécution de transactions 11. Dans l'exemple d'application de l'invention décrit ci-dessous, le système d'exécution de transactions est un système bancaire 11 permettant d'exécuter des transactions de paiement.

Le terminal mobile 1 est apte à être connecté au réseau mobile 4 et peut comprendre un élément sécurisé 5. Un tel élément sécurisé 5 est apte à stocker des données sécurisées dans une mémoire, et peut consister par exemple en une carte à puce comportant un microprocesseur relié par un bus de données à une mémoire vive et à une mémoire non volatile réinscriptible telle qu'une mémoire flash ou une mémoire EEPROM et stockant de manière sécurisée dans sa mémoire non volatile des données et des applications exécutables par ledit microprocesseur. L'élément sécurisé est typiquement une carte SIM (« Suscriber Identity Module », ou « module d'identification de souscripteur ») appelée souvent « module d'identification d'abonné », dénommée dans ce document « module d'identification d'utilisateur ».

Lors d'une connexion au réseau mobile, le terminal mobile est identifié par le réseau mobile de l'opérateur au moyen d'au moins un identifiant utilisateur.

Cet identifiant utilisateur est un identifiant associé à l'élément sécurisé 5, par exemple l'identifiant d'abonné (numéro IMSI, « International Mobile Subscriber Identity »,) et/ou le numéro d'appel (numéro MSISDN, « Mobile Station Integrated Service Digital Network Number »). Un tel identifiant utilisateur est unique et sert aussi d'identifiant du module d'identification d'utilisateur.

A cet égard, la notion d'identifiant utilisateur représente indifféremment dans ce document :
- un utilisateur, en tant que personne physique, souscripteur d'un compte client auprès d'un opérateur de réseau mobile (qu'il s'agisse d'un compte client avec ou sans abonnement, avec ou sans compte prépayé, etc...) et,
- un utilisateur, en tant que terminal mobile, connecté au réseau mobile, identifié et distingué des autres terminaux mobiles connectés au moyen du module d'identification d'utilisateur logé dans ce terminal.

L'utilisateur, personne physique, ayant souscrit un compte client auprès de l'opérateur du réseau mobile est reconnu au moyen d'un tel identifiant utilisateur comme utilisateur a priori du terminal mobile au travers du module d'identification d'utilisateur logé dans le terminal mobile utilisé, quelle que soit la personne physique utilisant effectivement ce terminal mobile et quel que soit le terminal mobile dans lequel est logé le module d'identification d'utilisateur.

Le procédé décrit ci-dessous est mis en œuvre par la plateforme 2 et permet la mise en œuvre de manière sécurisée d'une transaction entre le serveur du fournisseur de service 3 et le terminal mobile 1 sans divulguer au fournisseur de service ni l'identité de l'utilisateur ni les coordonnées bancaires de l'utilisateur.

Pour ce faire, la plateforme 2 se place comme un intermédiaire entre le terminal mobile 1 et le serveur 3. Le terminal mobile de l'utilisateur n'est identifié auprès du serveur 3 que par une donnée d'alias. La correspondance entre cet alias et l'identité réelle de l'utilisateur du terminal mobile reste inconnue du serveur 3 qui n'entre jamais en communication directe avec le terminal mobile 1. De plus les alias sont inexploitables dans un autre contexte ou par une autre entité du réseau. L'utilisation d'un tel alias pour l'identification du terminal mobile par le serveur du fournisseur de service permet également d'éviter à l'utilisateur du terminal mobile d'avoir à saisir un identifiant et un mot de passe pour s'identifier auprès du serveur.

La plateforme 2 se place également comme un intermédiaire entre le système bancaire 11 et les parties prenantes à la transaction, c'est-à-dire l'utilisateur et le fournisseur de service. Pour cela, la plateforme 2 peut être reliée à un dispositif de stockage 10, sous forme par exemple d'une base de données, qui stocke un identifiant du fournisseur de service auprès de la plateforme associée à un code d'identification du fournisseur de service auprès du système bancaire. Un tel identifiant peut être le nom du fournisseur, sa raison sociale, ou toute donnée codée permettant d'identifier le fournisseur de service telle que l'adresse IP de son serveur.

Le dispositif de stockage 10 stocke également une correspondance entre :
- la donnée d'alias associée à l'identifiant utilisateur au moyen duquel le terminal mobile de l'utilisateur est identifié auprès du réseau mobile de l'opérateur, la donnée d'alias servant à identifier le terminal mobile auprès du serveur de fournisseur de service ;
- et un code d'identification de l'utilisateur du terminal mobile auprès du système d'exécution de transactions.

De tels codes d'identification de l'utilisateur du terminal mobile et du fournisseur de service peuvent être un numéro de carte bancaire ou bien un numéro de compte tel qu'un identifiant de type RIB ou IBAN.

Le dispositif de stockage peut également mémoriser un code d'authentification relatif à l'utilisateur que l'utilisateur devra saisir à chaque transaction pour valider la transaction et autoriser le système bancaire à la mettre en œuvre au profit du fournisseur de service.

Le terminal mobile 1 de l'utilisateur peut consister en un téléphone mobile, un « smartphone », une tablette, une console de jeux, un ordinateur portable, un PDA (« Personal Digital Assistant ») ou tout autre terminal mobile doté d'un élément sécurisé 5 et de moyens de communication sans-fil lui permettant d'accéder au réseau mobile 4. Le terminal mobile 1 peut être un téléphone mobile de n'importe quel type, doté ou non d'un grand écran, d'une puce GPS, de moyens de saisies tactiles. Le terminal mobile 1 inclut au moins une application logicielle, telle qu'un navigateur, capable d'afficher une page de type page internet tel qu'une page HTML ou PHP ou plus généralement d'établir une liaison de communication avec un serveur distant. Ainsi un tel terminal mobile 1 n'est pas nécessairement un « smartphone ».

Le serveur du fournisseur de service 3 comprend une mémoire vive et des moyens de stockage tels qu'une mémoire non volatile réinscriptible (mémoire flash ou mémoire EEPROM) pouvant stocker une base de données et des moyens de traitement comportant un processeur. Le serveur peut également comprendre des moyens d'interface lui permettant de se connecter à la plateforme 2, de type filaire tel qu'une liaison Ethernet, ou sans-fil tel qu'une connexion Wifi ou Bluetooth. Un tel serveur peut également être connecté par le biais d'une connexion USB, Ethernet, Firewire, eSata, etc... à un dispositif de stockage externe tel qu'un disque dur externe ou un disque dur en réseau (« NAS »). Un tel serveur est dédié à fournir un service ou un produit à un utilisateur et peut également fournir un site mobile destiné à être affiché par le navigateur du terminal mobile 1 de l'utilisateur. Un tel service en ligne peut être fourni par le fournisseur de service pour le compte d'un établissement physique tel qu'un magasin, un musée, un centre d'exposition...

La plateforme 2 peut comprendre un serveur proxy, un module de traitement de données 12 comportant un processeur et des moyens de stockage tels qu'une mémoire non volatile réinscriptible (mémoire flash ou mémoire EEPROM) pouvant stocker ou être reliés à une base de données, notamment le dispositif de stockage 10 décrit ci-dessus. Ladite plateforme 2 peut également comprendre un module d'interface 13, de type filaire tel qu'une liaison Ethernet, ou sans-fil telle qu'une connexion Wifi ou Bluetooth lui permettant de se connecter d'une part audit réseau mobile et d'autre part au serveur 3 du fournisseur de service et au système bancaire 11.

Des réseaux privés virtuels (VPN, Virtual Private Network) peuvent être établis entre la plateforme 2 et le serveur 3 du fournisseur de service. De tels réseaux privés virtuels peuvent être vus comme une extension des réseaux locaux et permettent de préserver la sécurité logique que l'on peut avoir à l'intérieur d'un réseau local. Ils correspondent en fait à une interconnexion de réseaux locaux via une technique de « tunnel » permettant de sécuriser les données transmises, par la mise en œuvre d'algorithmes cryptographiques. Ainsi un fournisseur de service peut refuser toute communication en provenance d'une autre entité que la plateforme et est inaccessible aux moteurs de recherches et aux robots d'Internet, ainsi qu'aux pirates qui tenteraient de s'y connecter. La sécurité des échanges de données entre la plateforme et le serveur du fournisseur de service est ainsi grandement améliorée.

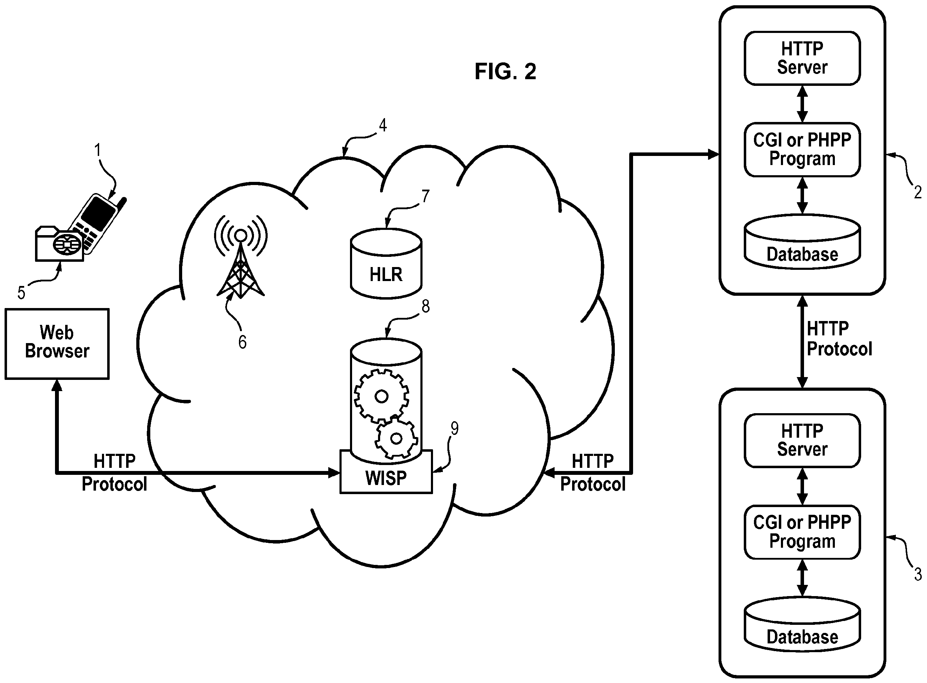

Selon un mode de mise en œuvre de l'invention, les communications entre le terminal mobile 1, le réseau mobile 4, la plateforme 2, le serveur du fournisseur de service 3 et le système bancaire 11 utilisent le protocole http. Les moyens matériels correspondant à une telle mise en œuvre de l'invention sont représentés en **figure 2****.**

Le réseau mobile 4 peut consister en un réseau de téléphonie mobile du type GSM, GPRS, UMTS, LTE... Les communications sur ce réseau peuvent être sécurisées, notamment par chiffrement des données échangées. A titre d'exemple le réseau de téléphonie mobile représenté sur la **figure 1** est un réseau mobile du type GSM comprenant une station de base (BTS) 6 connectée au terminal mobile 1 et au moins un enregistreur de localisation géographique des abonnés (HLR ou « Home Location Register ») 7. Le HLR consiste en une base de données centrale de l'opérateur de réseau mobile, comportant les informations relatives à tout utilisateur autorisé à utiliser ce réseau et notamment sa localisation dans le réseau. Le HLR contient notamment les informations suivantes caractérisant l'utilisateur lui-même: l'IMSI (« International Mobile Subscriber Identity »), identifiant unique de l'utilisateur et qui est aussi inscrit sur la carte SIM, l'IMEI (« International Mobile Equipment Identity») définissant la Station Mobile utilisée, soit généralement, le téléphone mobile de l'utilisateur, le MSISDN indiquant le numéro d'appel international via lequel l'utilisateur est joignable...

Le réseau mobile comprend également un module de traitement 8 permettant de générer une donnée d'alias à partir d'au moins un identifiant utilisateur associé à l'élément sécurisé 5 tel que l'IMSI et/ou le MSDISDN fourni par le HLR 7. Un tel module de traitement 8 est inclus dans une plateforme 9 d'accès au réseau Internet permettant à des terminaux du réseau mobile d'accéder au réseau Internet via le réseau mobile ou être connecté à une telle entité 9. Cette plateforme d'accès est communément appelée WISP (« Wireless Internet Service Provider »). On confondra par la suite le module de traitement 8 et la plateforme WISP.

La donnée d'alias peut résulter de toute transformation de cet identifiant utilisateur ou de ces identifiants d'utilisateur, par exemple une transformation par application d'une fonction de hachage. La fonction de transformation est choisie de telle sorte que la donnée d'alias obtenue par transformation est unique et permanente, permettant ainsi une identification non équivoque par la plateforme 2 de la personne physique souscripteur du compte client et également du terminal mobile de l'utilisateur. Cette donnée d'alias est utilisée comme unique identifiant du terminal mobile 1 de l'utilisateur auprès du serveur 3 du fournisseur de service.

La donnée d'alias peut être générée au moment de la production et/ou configuration du module d'identification d'utilisateur, ou encore lors de la première connexion au réseau mobile de l'opérateur d'un terminal mobile intégrant ce module d'identification d'utilisateur. La donnée d'alias générée est stockée en association avec un identifiant utilisateur dans une base de données propre à l'opérateur. La donnée d'alias est permanente et ne change pas lors des connexions suivantes au réseau mobile. La donnée d'alias sert ainsi d'identifiant anonymisé du terminal mobile et/ou de l'utilisateur de ce terminal mobile et/ou du module d'identification d'abonné de ce terminal.

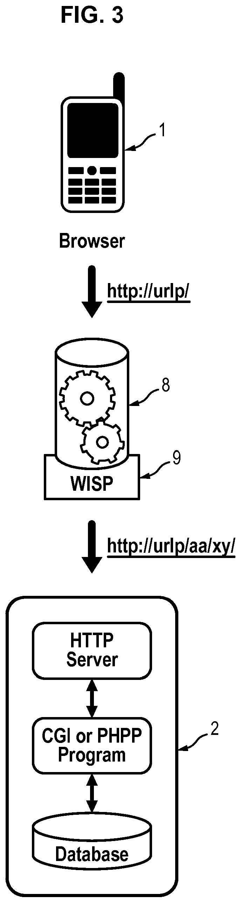

La plateforme 2 est conçue pour obtenir cette donnée d'alias, lors de l'établissement de la connexion du terminal mobile à la plateforme via le réseau mobile et pour transmettre cet alias au serveur 3 du fournisseur de service comme identifiant de l'utilisateur lors de toute communication entre le terminal mobile et le serveur du fournisseur de service. Un mode de réalisation utilisant le protocole HTTP (Hypertext Transfer Protocol) est décrit ci-dessous et illustré en référence aux **figures 2** **et** **3****.**

Le terminal mobile établit via le réseau mobile une connexion avec la plateforme. Lors de cette connexion, le terminal mobile est identifié par au moins un équipement de connexion du réseau mobile de l'opérateur qui obtient l'identifiant utilisateur associé au terminal mobile.

Selon une première variante, l'utilisateur saisit pour cela sur le navigateur de son terminal mobile 1 une adresse réseau telle qu'une adresse IP ou une adresse http permettant de se connecter à la plateforme 2. Cette adresse peut ensuite être ajoutée en favoris. Par exemple, une première requête HTTP est envoyée par le terminal contenant l'URL (« Uniform Resource Locator ») correspondant à la plateforme : http://urlp/, où 'urlp' est le domaine Web géré par la plateforme.

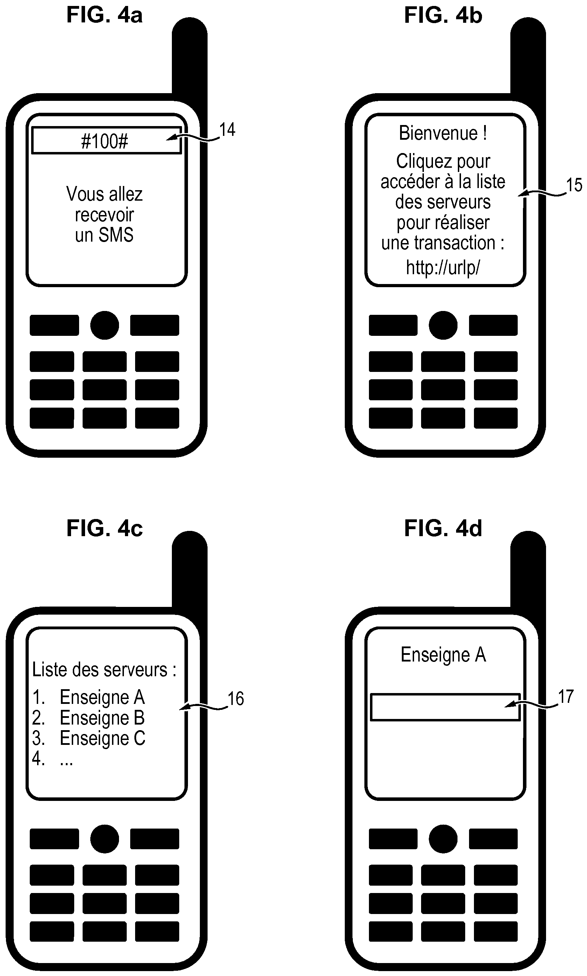

Selon une deuxième variante illustrée en figures 4a à 4d, un code unique USSD (« Unstructured Supplementary Service Data ») 14, par exemple, #100# peut avoir été défini pour faciliter la connexion du terminal mobile 1 à la plateforme 2. L'utilisateur peut alors saisir le code USSD sur le clavier de son terminal mobile 1 et recevoir en réponse un message lui permettant de se connecter à la plateforme tel qu'un message SMS 15 dans le corps duquel se trouve l'adresse de la plateforme 2. Un tel SMS peut être remplacé par n'importe quel type de message traité par le réseau mobile 4 de l'opérateur, par exemple un MMS.

L'adresse saisie est envoyée à la WISP 9 du réseau de l'opérateur. La WISP 9 n'autorise que les accès de terminaux mobiles 1 reconnus par le réseau mobile 4, c'est-à-dire pour lesquels un identifiant utilisateur peut être obtenu, par exemple par interrogation du module d'identification d'utilisateur 5. Toute tentative de connexion par un terminal n'ayant pas de module d'identification d'utilisateur, ou essayant de se connecter à partir d'autres réseaux tel qu'Internet est refusée par la WISP.

L'URL reçue est enrichie par la WISP en y insérant la donnée d'alias ('aa') et éventuellement une information de zone de localisation 'xy'. L'URL enrichie est alors par exemple sous la forme http://urlp/aa/xy/. La WISP 9 peut obtenir ces informations par interrogation d'équipements du réseau mobile de l'opérateur tels que le HLR 7 et le module de traitement 8. Lors d'une telle interrogation, la WISP peut fournir un identifiant du terminal mobile : par exemple un identifiant utilisateur contenu dans le module d'identification d'utilisateur du terminal mobile requérant une connexion à la plateforme 2.

Après identification du terminal mobile par le réseau mobile de l'opérateur suite à la demande de connexion du terminal mobile à la plateforme et lors de l'établissement de la connexion entre le terminal mobile et la plateforme, la donnée d'alias associée à l'identifiant utilisateur du terminal mobile lors d'une étape E1 est transmise à la plateforme.

La plateforme n'a pas besoin d'interroger le terminal mobile pour obtenir une information de localisation du terminal mobile 1. Aucun accord de transmission de données de géolocalisation de la part de l'utilisateur du terminal mobile 1 n'est requis puisque la plateforme 2 fait partie des équipements de l'opérateur. La WISP 9 peut également transmettre à la plateforme 2 l'identifiant de l'opérateur du réseau mobile 4. Ces informations peuvent être transmises à la plateforme 2 par la WISP (Wireless Internet Service Provider) du réseau mobile 4 sous forme d'une url tel qu'un lien http, comme illustré en **figure 3****.**

La plateforme reçoit ainsi la première requête HTTP contenant l'URL enrichie, et en extrait l'alias et l'éventuelle information de zone de localisation. La plateforme n'a ainsi pas connaissance du ou des identifiants utilisateur utilisés pour la génération de la donnée d'alias.

Puis, la plateforme peut proposer au terminal mobile une liste de serveurs disponibles auxquels le terminal mobile peut vouloir se connecter, c'est-à-dire avec lesquels l'utilisateur du terminal peut vouloir initier une transaction en renvoyant une liste 16 d'URL possibles correspondant aux différents serveurs. Une telle liste peut être établie par la plateforme en fonction de l'information de zone de localisation du terminal mobile transmise par la WISP. Cette liste peut alors être avantageusement classée par ordre croissant de distance entre la zone de localisation géographique du terminal mobile 1 et la localisation géographique du fournisseur de service comme illustré en **figure 4c****.** Selon une variante, la plateforme 2 renvoie également une page comportant une liste lorsqu'elle détermine qu'un seul serveur est disponible pour l'utilisateur. Alternativement la plateforme peut connecter directement le terminal mobile au seul serveur disponible, dans une zone géographique donnée autour de la localisation du terminal mobile par exemple, et transmettre la première requête HTTP à ce serveur. Si la plateforme 2 identifie qu'aucun serveur n'est disponible pour l'utilisateur, elle renvoie au terminal mobile 1 une page indiquant qu'aucun serveur n'est disponible dans la zone géographique dans laquelle se trouve l'utilisateur. Pour envoyer des messages au terminal mobile, tels que par exemple des pages comprenant des listes de serveurs disponibles, la plate-forme peut envoyer ces messages à la WISP accompagnés de la donnée d'alias utilisée pour identifier le destinataire du message.

Lorsque la plateforme route directement la première requête HTTP vers le seul serveur disponible, elle ajoute le domaine Web 'url3a' géré par le serveur disponible et supprime le cas échéant préalablement l'information de zone de localisation de l'URL : http://urlp/url3a/aa/.

Lorsque la plateforme renvoie au terminal une liste d'URL, ces URL sont sous la forme
http://urlp/url3a
http://urlp/url3b
http://urlp/url3c
où url3a, url3b, url3c sont les domaines Web gérés par différents serveurs 3a, 3b, 3c respectivement.

Lorsque plusieurs serveurs sont accessibles, un serveur est sélectionné dans la liste transmise.

Dans une première variante, l'utilisateur sélectionne lui-même le serveur dans la liste affichée sur le terminal mobile, par exemple en saisissant son choix dans un champ de saisie 17 illustré en figure 4d. Un message identifiant le serveur sélectionné parmi les serveurs disponibles est alors transmis du terminal mobile 1 à la WISP. La WISP retransmet ce message à la plateforme après lui avoir ajouté la donnée d'alias identifiant le terminal mobile de l'utilisateur et éventuellement l'information de la zone de localisation du terminal mobile. Ces informations peuvent être transmises par la WISP à la plateforme sous forme d'une URL tel qu'une adresse http.

Dans une deuxième variante, une règle de sélection d'un serveur est appliquée afin de procéder à une sélection automatique d'un serveur. La règle de sélection est par exemple basée sur des critères tels que : proximité entre la localisation géographique de la zone de connexion du terminal mobile et celle associé au serveur, ordre de préférence défini entre les serveurs, nouveauté du serveur, type de serveur (cinéma, restaurant, supermarché, etc...) ou autres. Dans cette variante, c'est la plateforme 2 qui identifie au moins un serveur sélectionné parmi les serveurs disponibles déterminés en appliquant une règle de sélection. Une confirmation peut être demandée à l'utilisateur.

Suite à cette identification du serveur sélectionné, la plateforme 2 peut renvoyer au terminal mobile 1 des données relatives au serveur sélectionné. Par exemple, la plateforme 2 peut renvoyer au terminal mobile 1 une page de type page internet. Cette page est alors affichée par le navigateur du terminal mobile 2 afin de délivrer des informations à l'utilisateur.

Lors de l'envoi ultérieur à la plateforme par le terminal mobile d'une requête HTTP destinée au serveur du fournisseur de service 3, la WISP intercepte cette requête HTTP et y insère la donnée d'alias 'aa' et éventuellement une information de zone de localisation 'xy' : http://urlp/url3a/aa/xy par exemple. Puis la plateforme route la requête HTTP vers le serveur concerné, après suppression éventuelle de l'information de zone de localisation de l'URL : http://urlp/url3a/aa/.

Le mécanisme d'enrichissement de requête HTTP qui vient d'être décrit sera utilisé pour toutes les requêtes émises par le terminal mobile vers la plateforme. Par exemple, les commandes pouvant être saisies par le terminal mobile 1, tel que le fait de cliquer sur un lien ou un bouton dans une page envoyée par le fournisseur de service, sont envoyées par le terminal mobile 1 à la WISP. Celle-ci les retransmet à la plateforme en remplaçant toute information d'identité du terminal mobile 1 par la donnée d'alias générée par le module de traitement 8 pour le terminal mobile 1. La plateforme retransmet ensuite ces commandes assorties de la donnée d'alias au serveur du fournisseur de service.

La plateforme 2 peut également mettre en relation le serveur du fournisseur de service 3 avec le terminal mobile 1 de l'utilisateur pour la fourniture de données de service autres que des pages de type pages Internet. Elle peut transmettre de telles données de service accompagnées d'une donnée d'alias identifiant leur destinataire à la WISP qui, grâce à sa connaissance de la correspondance entre la donnée d'alias et l'identifiant utilisateur du terminal mobile 1, peut transmettre de telles données au terminal mobile 1 pour le compte du serveur du fournisseur de service 3. Le terminal mobile peut ainsi se voir transmettre des messages de type SMS ou MMS. A titre d'exemple les échanges de telles données entre un serveur d'un fournisseur de service, la plateforme et la WISP peuvent se faire via le protocole FTP ou le protocole SNPP par exemple.

Selon une variante non revendiquée, la plateforme 2 peut transférer une demande d'envoi de message électronique tel qu'un email pour le compte du fournisseur de service 3 accompagné de la donnée d'alias à la WISP qui se chargera de transmettre le message électronique au destinataire grâce à sa connaissance de la correspondance entre la donnée d'alias et l'identifiant utilisateur du terminal mobile

Selon une autre variante, la plateforme 2 peut également établir une communication vocale entre le terminal mobile 1 identifié par une première donnée d'alias et le serveur du fournisseur de service 3 ou un autre terminal mobile identifié par une seconde donnée d'alias, suite à une demande de mise en relation vocale émise par un serveur d'un fournisseur de service. Si les deux données d'alias appartiennent à un seul opérateur, la plateforme transmet la demande de mise en relation vocale accompagnée des deux données d'alias à l'unique opérateur concerné qui se charge ensuite d'établir la communication vocale entre l'appelant et l'appelé.

Si les deux données d'alias appartiennent à deux opérateurs différents, la plateforme transmet la demande de mise en relation vocale de l'appelé accompagnée de son alias à l'opérateur concerné, en retour celui-ci renvoie à la plateforme un numéro d'appel temporaire. La plateforme transmet alors le second alias de l'appelant ainsi que le numéro d'appel temporaire au deuxième opérateur qui se charge d'établir la communication vocale entre l'appelant et l'appelé.

La plateforme 2 peut mettre à disposition de l'utilisateur une page internet personnelle d'administration à laquelle l'utilisateur peut se connecter depuis son terminal mobile 1 pour vérifier des informations personnelles telles que son adresse de courrier électronique (email), son code d'identification ou son code d'authentification, et pour corriger ces informations si nécessaire. Optionnellement, l'utilisateur peut également spécifier sur cette page s'il accepte de recevoir des messages de la part de fournisseurs de service par SMS, email, ou communication vocale et peut également spécifier un nombre maximal de messages qu'il accepte de recevoir par ces biais sur une période donnée, par exemple une semaine ou un mois.

Une telle page internet est accessible depuis le terminal mobile 1 en se connectant à l'adresse du site publique de la plateforme. Lors du traitement d'une demande de connexion à cette page par le réseau de l'opérateur, la WISP ajoute à l'url de cette page la donnée d'alias identifiant l'utilisateur du terminal mobile. Lors de la première connexion d'un terminal mobile à cette page, la plateforme crée un espace personnel d'administration lié à la donnée d'alias du terminal mobile. Lors de toutes les connexions ultérieures, la plateforme donnera accès automatiquement à l'utilisateur du terminal mobile à cet espace personnel sans que l'utilisateur ait à fournir un identifiant ou un mot de passe.

En variante, une telle page est une page internet accessible depuis n'importe quel dispositif connecté au réseau Internet. Afin de pouvoir identifier l'espace personnel auquel il cherche à accéder, l'utilisateur envoie depuis son terminal mobile un SMS contenant un mot-clé particulier à un numéro prédéfini. Lors de l'envoi de ce SMS à la plateforme, l'opérateur remplace le numéro de l'émetteur par l'alias du terminal mobile. A la réception du SMS, la plateforme transmet un code d'identification à destination du terminal mobile identifié par son alias. Ce code peut être délivré au terminal mobile sous la forme d'un SMS selon le processus décrit ci-dessus. La saisie par l'utilisateur du code d'identification sur la page internet de la plateforme lui permet alors d'accéder à l'espace d'administration lié à son terminal mobile.

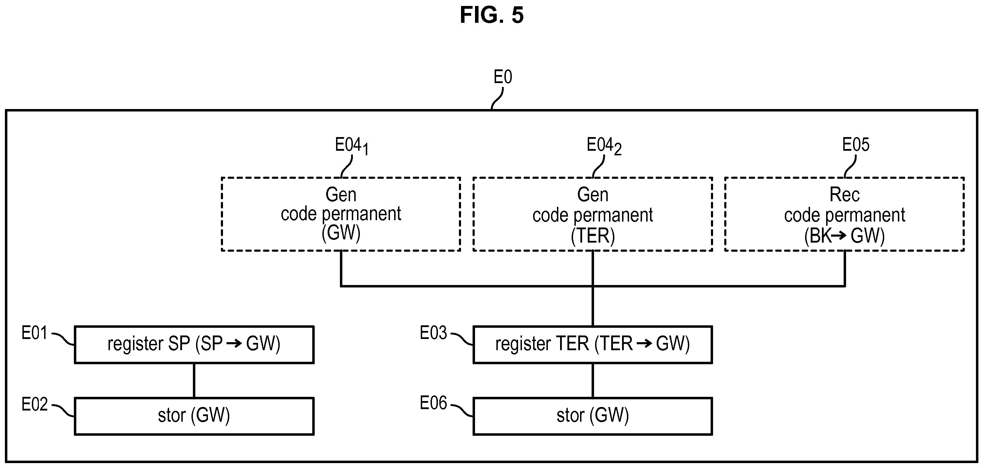

Pour permettre la mise en œuvre d'une transaction sécurisée et anonyme entre l'utilisateur et le fournisseur de service, une première phase de mémorisation E0, représentée en **Figure 5****,** est tout d'abord mise en œuvre au cours de laquelle l'utilisateur et le fournisseur de service peuvent s'inscrire auprès de la plateforme pour lui fournir leur code d'identification et au cours de laquelle le code d'authentification de l'utilisateur peut être défini afin que celle-ci mémorise une correspondance entre la donnée d'alias et le code d'identification de l'utilisateur auprès du système d'exécution de transactions 11.

La plateforme peut mémoriser en outre une correspondance entre identifiant du fournisseur de service et le code d'identification du fournisseur de service auprès du système d'exécution de transactions 11.

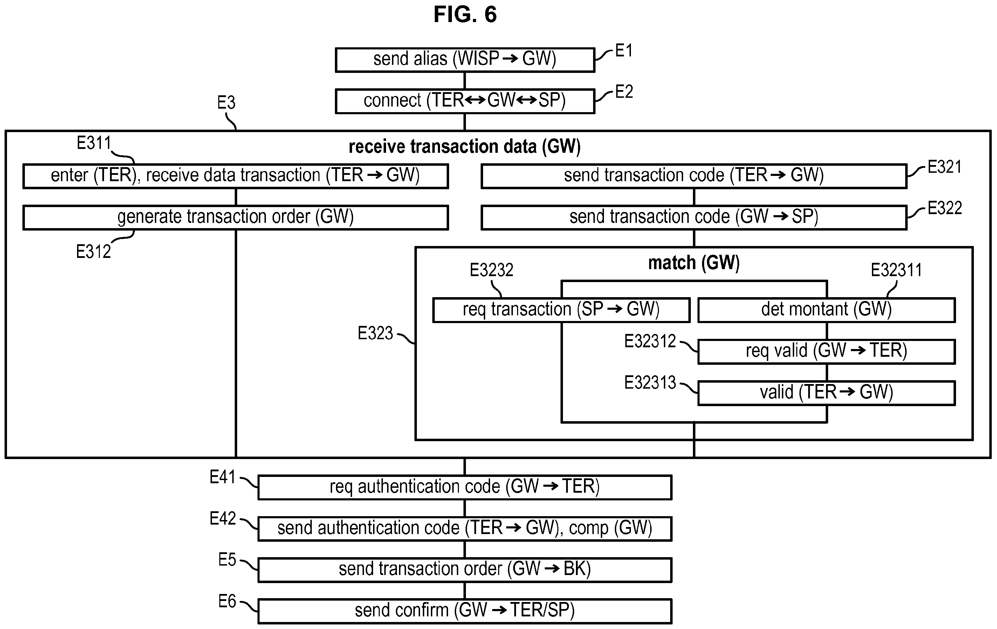

Une phase de transaction, représentée en **figure 6****,** est ensuite mise en œuvre au cours de laquelle la plateforme réalise les étapes suivantes :
- réception E1 de la donnée d'alias lors de l'établissement d'une connexion entre le terminal mobile et la plateforme par l'intermédiaire du réseau mobile et suite à une identification du terminal mobile par le réseau mobile au moyen dudit identifiant utilisateur,
- mise en relation E2, par l'intermédiaire de la plateforme 2 et via le réseau mobile, du terminal mobile de l'utilisateur avec le serveur du fournisseur de service, ladite donnée d'alias servant à identifier le terminal mobile auprès dudit serveur du fournisseur du service,
- réception E3 de données de transaction représentatives d'une transaction à exécuter entre l'utilisateur du terminal mobile et ledit fournisseur de service,
- transmission E5 au système d'exécution de transactions 11 d'un ordre d'exécution de la transaction comprenant ledit code d'identification de l'utilisateur et ledit code d'identification du fournisseur de service auprès du système d'exécution de transactions, de sorte à ce que le système d'exécution de transactions mette en œuvre ladite transaction.

Les étapes exécutées lors de la mise en œuvre du procédé sont décrites plus précisément dans les paragraphes suivants.

### Phase de mémorisation

Lors d'une étape de mémorisation E0, l'utilisateur et le fournisseur de service peuvent s'inscrire auprès de la plateforme pour pouvoir ultérieurement prendre part à une transaction sécurisée.

Cette étape de mémorisation E0 peut comprendre une première étape de réception E01 au cours de laquelle la plateforme reçoit un message d'inscription du fournisseur de service transmis par le serveur de celui-ci. Ce message d'inscription du fournisseur peut comprendre le code d'identification du fournisseur de service. Le fournisseur de service peut également au cours de cette étape indiquer une adresse physique caractérisant la localisation géographique de son établissement physique. Dans un mode de réalisation non limitatif, l'adresse physique peut correspondre au centre géographique d'une activité de service sans que le fournisseur de service ne dispose nécessairement d'un établissement physique à ladite adresse. Un même fournisseur de service peut inscrire plusieurs établissements physiques géographiquement distants ou plusieurs activités de service géographiquement distantes.

Le fournisseur de service peut également fournir une information telle qu'une distance maximale d'un utilisateur par rapport à la localisation géographique indiquée pour établir une transaction, permettant à la plateforme 2 de déterminer une zone géographique de disponibilité dans laquelle le serveur du fournisseur de service peut être proposé à un utilisateur d'un terminal mobile 1 lors de sa connexion à la plateforme. En l'absence de fourniture d'une telle information une zone géographique correspondant à un disque centré sur la localisation géographique indiquée et ayant pour rayon une valeur par défaut peut être retenue. Une telle zone géographique ne peut excéder le territoire couvert par l'opérateur du réseau mobile 4. Une zone géographique peut correspondre à une ou plusieurs cellules de localisation gérées par l'opérateur du réseau mobile. L'étendue de la zone géographique est ainsi variable et fonction de la portée maximum de la BTS de la ou des cellules correspondant à la zone géographique définie.

Cette étape de mémorisation E0 peut ensuite comprendre une première étape de stockage E02 au cours de laquelle la plateforme stocke dans le dispositif de stockage 16 le code d'identification du fournisseur de service reçu associé à l'identifiant du fournisseur de service.

La plateforme mémorise ainsi les coordonnées bancaires du fournisseur de service afin de pouvoir ultérieurement les communiquer au système bancaire pour la mise en œuvre d'une transaction.

L'étape d'enrôlement E0 peut également comprendre une deuxième étape de réception E03 au cours de laquelle la plateforme reçoit un message d'inscription de l'utilisateur du terminal mobile transmis par celui-ci. Ce message d'inscription de l'utilisateur peut comprendre le code d'identification de l'utilisateur. Selon le mécanisme décrit ci-dessus, ce message comprend également la donnée d'alias de l'utilisateur, insérée par la WISP, et identifiant le terminal mobile de l'utilisateur souhaitant s'inscrire auprès de la plateforme.

L'inscription de l'utilisateur peut également nécessiter la définition du code d'authentification de l'utilisateur afin que celui-ci puisse l'utiliser ultérieurement lors d'une transaction pour valider celle-ci.

Selon une première variante E041, l'étape de mémorisation E0 comprend une première étape de génération de code au cours de laquelle le code d'authentification de l'utilisateur est généré par la plateforme et transmis à l'utilisateur.

Selon une deuxième variante E042, le code d'authentification est généré par l'utilisateur lui-même. Celui-ci peut le choisir et le saisir sur son terminal mobile ou bien déclencher une génération aléatoire du code d'authentification par le terminal mobile. Le code d'authentification généré peut alors être inclus dans le message d'inscription de l'utilisateur du terminal mobile transmis par celui-ci à la plateforme lors de la deuxième étape de réception E03.

Selon une troisième variante, le code d'authentification de l'utilisateur est généré par le système bancaire. L'étape de mémorisation E0 peut alors comprendre une troisième étape de réception E05 au cours de laquelle la plateforme reçoit un message d'enrôlement transmis par le système bancaire, ledit message d'enrôlement comprenant le code d'authentification de l'utilisateur généré par le système bancaire. L'envoi de ce message par le système bancaire à la plateforme peut faire suite à l'envoi par la plateforme au système bancaire d'une requête de génération d'un code d'authentification pour l'utilisateur. Le code d'authentification peut ainsi être défini comme correspondant à un autre code déjà connu de l'utilisateur et utilisé par celui-ci au sein du système bancaire, tel que son code de carte bancaire ou un identifiant d'accès à un service de banque à distance, sans nécessiter pour autant l'intervention de l'utilisateur. Il est ainsi également inutile de transmettre un message indiquant le code d'authentification choisi entre la plateforme et l'utilisateur, limitant les risques d'interception d'un tel message par un pirate.

L'étape de mémorisation E0 peut enfin comprendre une deuxième étape de stockage E06 au cours de laquelle la plateforme stocke dans le dispositif de stockage 16 la donnée d'alias de l'utilisateur associée à son code d'identification et éventuellement au code d'authentification de l'utilisateur.

La plateforme mémorise ainsi pour chaque utilisateur inscrit, dont le terminal mobile est identifié par sa donnée d'alias, son code d'identification auprès du système bancaire afin de pouvoir le transmettre au système bancaire lors d'une transaction ultérieure, et éventuellement son code d'authentification afin de vérifier la validation de la transaction par l'utilisateur.

### Phase de transaction

Les paragraphes suivants décrivent les étapes mises en œuvre au cours de la phase de transaction pour exécuter de manière sécurisée une transaction entre l'utilisateur du terminal mobile et le fournisseur de service, pour un certain montant appelé montant de la transaction.

La phase de transaction comprend tout d'abord l'étape de réception de la donnée d'alias E1. Au cours de cette étape, la plateforme reçoit de la WISP la donnée d'alias associée au terminal mobile qui a demandé sa connexion à la plateforme. La plateforme peut vérifier que l'utilisateur du terminal mobile s'est bien inscrit préalablement, c'est-à-dire qu'elle détient un code d'identification associé à cette donnée d'alias. Lors de cette étape, la plateforme peut proposer au terminal mobile une liste de serveurs de fournisseurs de services avec lesquels le terminal mobile peut souhaiter entrer en communication pour initier une transaction.

L'étape de mise en relation E2 permet au terminal mobile de rentrer en communication avec le serveur du fournisseur de service avec lequel l'utilisateur souhaite initier une transaction, par l'intermédiaire de la plateforme. Aucune connexion directe n'est établie entre le terminal mobile et le serveur du fournisseur de service et tous les échanges entre ces deux entités passent par la plateforme qui retransmet chaque message à son destinataire. Le terminal mobile n'est identifié auprès du serveur du fournisseur de service que par la donnée d'alias, préservant ainsi l'anonymat de l'utilisateur. La connexion du terminal mobile au serveur du fournisseur de service par l'intermédiaire de la plateforme peut entrainer l'affichage sur le terminal mobile du site mobile proposé par le serveur du fournisseur de service. Une telle page peut proposer à l'utilisateur du terminal mobile une sélection de produits ou de services pour lesquels l'utilisateur peut vouloir initier une transaction par le biais de son terminal mobile.

L'étape de réception de données de transaction E3 a pour but de définir la transaction, c'est-à-dire de relier :
- la donnée d'alias de l'utilisateur, identifiant le terminal mobile de l'utilisateur sans révéler son identité, et à laquelle est associé le code d'identification de l'utilisateur auprès du système d'exécution de transactions,
- l'identifiant du fournisseur de service, identifiant le fournisseur de service avec lequel l'utilisateur du terminal mobile veut conduire une transaction, et à laquelle est associé le code d'identification du fournisseur de service auprès du système d'exécution de transactions,
- et le montant de cette transaction.

Les données de transaction reçues par la plateforme peuvent notamment comprendre le montant de la transaction, une identification d'au moins un service ou produit à fournir par le fournisseur de service ou encore un code de transaction qui identifie la transaction à exécuter auprès du fournisseur de service.

Les données de transaction peuvent être transmises directement par le terminal mobile à la plateforme, par exemple dans le cas d'un virement, ou bien être définies en coopération avec le serveur du fournisseur de service, par exemple dans le cas d'une transaction résultant d'une sélection par l'utilisateur du terminal mobile d'un produit ou d'un service sur le site du fournisseur de service.

Selon une première variante, l'étape de réception de données de transaction E3 peut comprendre une étape de réception de données de transaction en provenance du terminal mobile E311 au cours de laquelle la plateforme reçoit des données de transaction provenant du terminal mobile suite à une saisie de ces données de transaction effectuée au moyen du terminal mobile. L'utilisateur du terminal mobile peut par exemple saisir directement manuellement sur son terminal mobile le montant d'un virement et un identifiant du fournisseur de service. L'utilisateur peut également utiliser son terminal mobile pour scanner un code barre ou bien lire une étiquette RFID afin d'obtenir un montant d'un article ou d'un service et un identifiant du fournisseur de service. Les données de transaction transmises par le terminal mobile sont accompagnées de la donnée d'alias associée à celui-ci, insérée par la WISP dans le message transmis à la plateforme.

L'étape de réception de données de transaction E3 peut ensuite comprendre une étape de génération E312 de l'ordre d'exécution de la transaction à partir desdites données de transaction reçues et de la donnée d'alias. La plateforme peut utiliser la donnée d'alias pour retrouver le code d'identification de l'utilisateur nécessaire à la définition de la transaction. De même, elle peut utiliser l'identifiant du fournisseur de service pour retrouver le code d'identification du fournisseur de service. Alternativement, si les données de transaction ne contiennent pas d'identifiant du fournisseur de service, la plateforme peut sélectionner comme code d'identification du fournisseur de service pour la transaction le code d'identification associé au fournisseur de service avec lequel le terminal mobile est entré en communication par le biais de la plateforme.

Selon une deuxième variante, l'utilisateur du terminal mobile peut initier la transaction en saisissant un code de transaction identifiant la transaction à exécuter auprès du fournisseur de service et correspondant à un certain montant de transaction. Ce code de transaction peut avoir été généré par le serveur du fournisseur de service et associé temporairement à un montant de transaction. Le code de transaction peut également identifier un équipement susceptible de fournir le montant de transaction audit fournisseur de service.

Le fournisseur de service peut avoir communiqué à l'utilisateur du terminal mobile ledit code de transaction, éventuellement accompagné du montant de la transaction associé. Cette transmission peut par exemple être mise en œuvre par voie orale ou par la remise d'une facture papier, telle qu'une facturette de caisse enregistreuse, ou bien encore par e-mail ou par un affichage à l'écran dans le cas d'une transaction à distance. L'utilisateur du terminal prend ainsi connaissance du code de transaction associé par le serveur du fournisseur de service au montant de la transaction que cet utilisateur veut conduire avec le fournisseur de service.

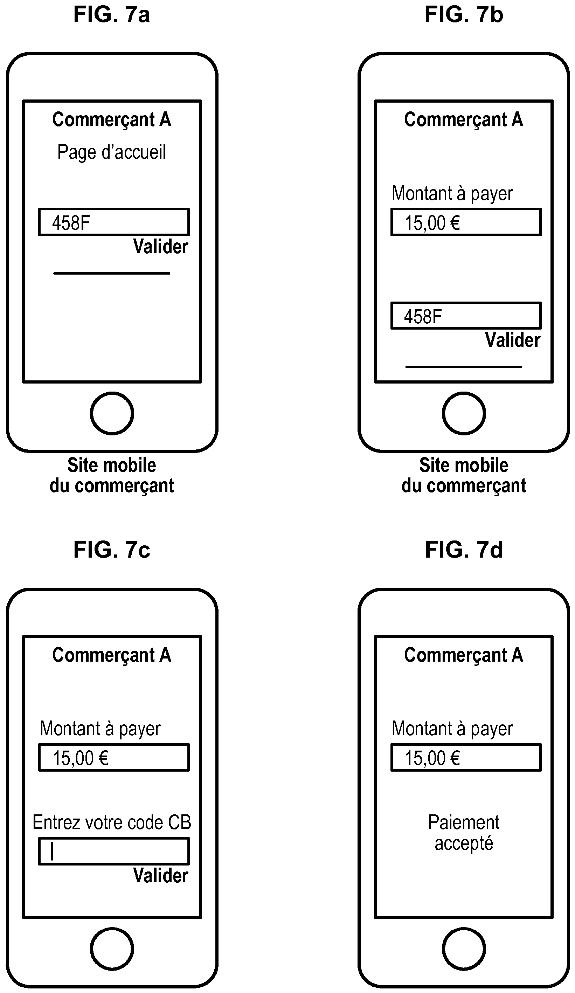

L'étape de réception de données de transaction E3 comprend alors une étape de réception E321 par la plateforme du code de transaction transmis par le terminal mobile. Ce code peut avoir été saisi sur une page du site mobile proposé par le serveur du fournisseur de service comme représenté en **figure 7a****.**

L'étape de réception de données de transaction E3 comprend ensuite une étape de transmission E322 par la plateforme du code de transaction au serveur du fournisseur de service auquel le terminal mobile de l'utilisateur est connecté. Le fournisseur de service prend ainsi connaissance qu'un utilisateur identifié par sa donnée d'alias veut initier avec lui une transaction pour un montant correspondant au code de transaction transmis.

L'étape de réception de données de transaction E3 comprend alors une étape de mise en correspondance E323 de la donnée d'alias de l'utilisateur du terminal mobile, du montant de la transaction et de l'identifiant dudit fournisseur de service.

Selon une première variante le fournisseur de service peut demander à la plateforme de déclencher l'exécution de la transaction entre lui-même et le terminal mobile de l'utilisateur identifié par sa donnée d'alias, pour le montant de transaction associé au code de transaction fourni. L'étape de mise en correspondance E323 peut alors comprendre une étape de requête E3232 au cours de laquelle la plateforme reçoit un message de requête de transaction transmis par le serveur du fournisseur de service et comprenant la donnée d'alias de l'utilisateur du terminal mobile et le montant de la transaction. Ce message de requête peut également comprendre l'identifiant du fournisseur de service, identifiant le fournisseur de service auprès de la plateforme, ou bien cet identifiant peut être déduit par la plateforme de la réception du message, par exemple en fonction d'un code ou d'une adresse électronique identifiant vis-à-vis de la plateforme le serveur du fournisseur de service ayant transmis le message. Selon un mode de mise en œuvre, le serveur du fournisseur de service peut consister en un terminal mobile similaire à celui de l'utilisateur, connecté également à la plateforme par un réseau mobile et l'identifiant du serveur du fournisseur de service auprès de la plateforme peut être une donnée d'alias similaire à celle identifiant le terminal mobile de l'utilisateur. La plateforme n'a alors pas non plus connaissance de l'identité du fournisseur de service et le WISP de l'opérateur inclut dans tous les messages transmis par le serveur du fournisseur de service à la plateforme la donnée d'alias du fournisseur de service. La plateforme réalise alors la mise en correspondance de la donnée d'alias de l'utilisateur du terminal mobile, du montant de la transaction et de l'identifiant du fournisseur de service.

Selon une deuxième variante, une validation du montant de la transaction peut être demandée à l'utilisateur avant de requérir l'exécution de la transaction auprès de la plateforme. Pour cela, l'étape de mise en correspondance E323 peut comprendre une étape de détermination E32311 du montant de ladite transaction correspondant audit code de transaction reçu, et une étape de transmission E32312 au terminal mobile d'un message de demande de validation comprenant le montant de transaction déterminé. La plateforme peut recevoir du serveur du fournisseur de service le montant associé au code de transaction et générer le message de demande de validation. Alternativement, la plateforme peut recevoir directement le message de demande de validation et prendre ainsi connaissance du montant de la transaction avant de retransmettre ce message au terminal mobile.

Ce message de requête de validation peut comprendre l'identifiant du fournisseur de service et le montant de la transaction. Ce message de requête de validation peut optionnellement rappeler le code de transaction saisi par l'utilisateur, comme représenté en **figure 7b****.** L'étape de mise en correspondance E1 comprend alors une étape de réception E32313 d'un message de validation de transaction transmis par le terminal mobile, ledit message comprenant la donnée d'alias de l'utilisateur du terminal mobile, le montant de ladite transaction et l'identifiant dudit fournisseur de service auprès de la plateforme. Ce message comprend automatiquement la donnée d'alias de l'utilisateur insérée par le WISP. La plateforme réalise alors la mise en correspondance E323 de la donnée d'alias de l'utilisateur du terminal mobile, du montant de la transaction et de l'identifiant du fournisseur de service.

L'ordre d'exécution de la transaction n'est transmis au système d'exécution de transactions 11 lors de l'étape de transmission de l'ordre d'exécution E5 que si le message de validation en provenance du terminal mobile est reçu par la plateforme.

Par les étapes qui viennent d'être décrites, la plateforme prend connaissance des deux parties de la transaction et du montant de celle-ci sans que l'identité de l'utilisateur du terminal mobile ne soit connue du fournisseur de service et sans nécessiter la saisie par l'utilisateur du terminal mobile de nombreuses données. Une fois connecté à la plateforme, l'utilisateur du terminal mobile n'a en effet qu'à choisir le fournisseur de service si plusieurs lui sont proposés par la plateforme et à saisir le code de transaction.

La phase de transaction peut ensuite comprendre, lorsque lors de l'étape de mémorisation E0 un code d'authentification relatif à l'utilisateur a été mémorisé, des étapes de :
- transmission E41 au terminal mobile 1 d'une requête de saisie dudit code d'authentification,
- réception E42 d'un code saisi par ledit utilisateur et comparaison du code saisi avec le code d'authentification mémorisé,
- transmission E5 de l'ordre d'exécution de la transaction si le code saisi et le code d'authentification mémorisé sont identiques.

Lors de l'étape de transmission E41 la plateforme transmet au terminal mobile de l'utilisateur identifié par la donnée d'alias, une requête de saisie de son code d'authentification, comme représenté en **figure 7c****.** Cette requête peut comprendre l'identifiant du fournisseur de service et le montant de la transaction.

La connaissance par l'utilisateur de son code d'authentification est en ensuite vérifiée en comparant le code d'authentification saisi par l'utilisateur avec le code d'authentification associé à la donnée d'alias de l'utilisateur du terminal mobile mémorisé par la plateforme.

Pour cela, l'utilisateur saisit son code d'authentification sur son terminal mobile pour manifester son accord à la réalisation de la transaction et pour prouver que la transaction n'est pas en train d'être conduite par un imposteur qui lui aurait volé son terminal mobile.

Le terminal mobile transmet ensuite le code d'authentification saisi par l'utilisateur à la plateforme.

La plateforme compare, lors d'une étape E42, le code d'authentification saisi sur le terminal mobile et transmis par le terminal mobile et le code d'authentification stocké par la plateforme dans le dispositif de stockage associé à la donnée d'alias de l'utilisateur du terminal mobile. En cas de comparaison positive, c'est-à-dire si le si le code d'authentification saisi et le code d'authentification mémorisé sont identiques, l'utilisateur est authentifié et la plateforme peut alors commander l'exécution de la transaction.

La phase de transaction comprend enfin l'étape de transmission E5 au cours de laquelle la plateforme transmet au système d'exécution de transactions un ordre d'exécution de la transaction entre l'utilisateur et le fournisseur de services, cet ordre de transaction comprenant les codes d'identification de l'utilisateur et du fournisseur de service sorte à ce que le système bancaire mette en œuvre cette transaction. La plateforme peut retrouver les codes d'identification de l'utilisateur et du fournisseur de service à partir de la donnée d'alias de l'utilisateur et de l'identifiant du fournisseur de service et des associations stockées dans le dispositif de stockage 10 lors des première et deuxième étapes de stockage E02 et E06. Cet ordre d'exécution de transactions peut être généré à partir de données de transaction reçues lors de l'étape E3 et notamment du montant de la transaction, et de la donnée d'alias.

Une fois la transaction réalisée avec succès par le système d'exécution de transactions, la plateforme peut recevoir un message de confirmation de la part du système d'exécution de transactions. La plateforme peut alors, lors d'une étape d'envoi de confirmation E6, transmettre au terminal mobile et/ou au fournisseur de service un message de confirmation de succès de transaction, comme représenté en **figure 7d****.** Le message de confirmation transmis au terminal mobile peut être un email ou un SMS. Le message de confirmation transmis au fournisseur de service peut être un email, mais également un SMS si le fournisseur de service est doté d'un terminal mobile, par exemple si le serveur du fournisseur de service est lui-même un terminal mobile.

Une transaction peut ainsi être réalisée de manière sécurisée, sur un réseau distinct du réseau Internet, sans que l'identité ni les coordonnées bancaires de l'utilisateur du terminal mobile ne soient révélées au fournisseur de service, sans exiger de cet utilisateur la saisie de nombreuses données sur son terminal mobile, et sans nécessiter une infrastructure fixe et/ou dédiée de la part du fournisseur de service.

## Revendications

1. Procédé de sécurisation d'une transaction entre un terminal mobile (1) d'un utilisateur et un serveur (3) d'un fournisseur de service par l'intermédiaire d'une plateforme (2) connectée au terminal mobile via une plateforme d'accès (9) au réseau internet d'un réseau mobile (4) d'un opérateur, au serveur (3) du fournisseur de service et à un système d'exécution de transactions (11), le procédé comprenant les étapes suivantes :
- génération par ladite plateforme d'accès (9) au réseau internet du réseau mobile (4) d'une donnée d'alias associée à un identifiant utilisateur au moyen duquel le terminal mobile (1) est identifié auprès du réseau mobile (4) de l'opérateur dans une base de données propre à l'opérateur, la plateforme (2) n'ayant pas connaissance dudit identifiant utilisateur ;
- mémorisation (E0) par la plateforme (2) d'une correspondance entre un code d'identification d'utilisateur auprès du système d'exécution de transaction (11) et la donnée d'alias,
- établissement d'une connexion entre le terminal mobile (1) et la plateforme (2) par l'intermédiaire de la plateforme d'accès (9) au réseau internet du réseau mobile (4) au réseau internet du réseau mobile (4),
- réception (E1) par la plateforme en provenance de la plateforme d'accès (9) au réseau internet du réseau mobile (4) de la donnée d'alias lors de l'établissement de la connexion entre le terminal mobile (1) et la plateforme (2),
- mise en relation (E2), par l'intermédiaire de la plateforme (2) et via la plateforme d'accès (9) au réseau internet du réseau mobile (4) au réseau internet du réseau mobile (4), du terminal mobile (1) de l'utilisateur avec le serveur (3) du fournisseur de service, ladite donnée d'alias servant à identifier le terminal mobile (1) auprès dudit serveur (3) du fournisseur du service, la plateforme d'accès (9) remplaçant l'identifiant utilisateur par la donnée d'alias lorsque le terminal mobile (1) communique avec le serveur (3) ou la plateforme (2) et identifiant, au moyen de l'identifiant utilisateur associé à la donnée d'alias, le terminal mobile (1) lorsque le serveur (3) ou la plateforme (2) communique avec le terminal (1),
- réception (E3) par la plateforme (2) de données de transaction représentatives d'une transaction à exécuter entre l'utilisateur du terminal mobile (1) et ledit fournisseur de service,
- transmission (E5) par la plateforme (2) au système d'exécution de transactions (11) d'un ordre d'exécution de la transaction comprenant ledit code d'identification d'utilisateur et un code d'identification du fournisseur de service auprès du système d'exécution de transactions (11), de sorte à ce que le système d'exécution de transactions (11) mette en oeuvre ladite transaction.

2. Procédé selon la revendication 1 dans lequel la donnée d'alias est un identifiant anonymisé, unique et permanent.

3. Procédé selon l'une des revendications précédentes dans lequel l'étape de mémorisation (E0) d'une correspondance comprend la mémorisation par la plateforme d'une correspondance entre un identifiant du fournisseur de service et ledit code d'identification du fournisseur de service auprès du système d'exécution de transactions (11).

4. Procédé selon la revendication 3 dans lequel les données de transaction comprennent un code de transaction qui identifie la transaction à exécuter auprès du fournisseur de service.

5. Procédé selon l'une des revendications précédentes dans lequel les données de transaction comprennent une identification d'au moins un service ou produit à fournir par le fournisseur de service.

6. Procédé selon l'une des revendications précédentes dans lequel les données de transaction comprennent un montant de transaction.

7. Procédé selon la revendication 1 comprenant les étapes suivantes :
- mémorisation par la plateforme (E0) d'un code d'authentification d'utilisateur en association avec le code d'identification d'utilisateur,
- transmission par la plateforme (E41) au terminal mobile (1) d'une requête de saisie du code d'authentification,
- réception par la plateforme (E42) d'un code en provenance du terminal mobile (1) saisi par l'utilisateur et comparaison du code saisi avec le code d'authentification mémorisé,
- transmission par la plateforme (E5) de l'ordre d'exécution de la transaction lorsque le code saisi et le code d'authentification mémorisé sont identiques.

8. Procédé selon la revendication 1 dans lequel l'étape de réception (E3) de données de transaction comprend :
- une réception par la plateforme (E311) en provenance du terminal mobile (1) des données de transaction suite à une saisie des données de transaction effectuée au moyen du terminal mobile (1),
- une génération par la plateforme (E312) dudit ordre d'exécution de la transaction à partir desdites données de transaction reçues et de la donnée d'alias.

9. Procédé selon la revendication 4 dans lequel l'étape de réception (E3) des données de transaction comprend :
- une réception par la plateforme (E321) en provenance du terminal mobile (1) du code de transaction et
- une transmission par la plateforme (E322) au serveur du fournisseur de service du code de transaction reçu suite à une saisie du code de transaction effectuée au moyen du terminal mobile (1).

10. Procédé selon la revendication 9, dans lequel ledit code de transaction étant associé à un montant de la transaction, suite à la réception dudit code de transaction, l'étape de réception (E3) de données de transaction comprend une mise en correspondance par la plateforme (E323) de la donnée d'alias, du montant de la transaction et de l'identifiant dudit fournisseur de service.

11. Procédé selon la revendication précédente, dans lequel l'étape de mise en correspondance comprend en outre préalablement les étapes suivantes :
- détermination par la plateforme (E32311) du montant de ladite transaction correspondant au code de transaction reçu ;
- transmission par la plateforme (E32312) au terminal mobile (1) d'une demande de validation comprenant le montant de ladite transaction correspondant audit code de transaction reçu ;
- réception par la plateforme (E32313) d'un message de validation de transaction transmis par le terminal mobile (1), ledit message comprenant la donnée d'alias, le montant de ladite transaction et l'identifiant dudit fournisseur de service auprès de la plateforme (2) ;
et dans lequel l'ordre d'exécution de la transaction est transmis au système d'exécution de transactions (11) si le message de validation en provenance du terminal mobile (1) est reçu par la plateforme (2).

12. Procédé selon la revendication 10 dans lequel l'étape de mise en correspondance comprend en outre préalablement une réception par la plateforme (E3232) d'un message de requête de transaction transmis par le serveur (3) du fournisseur de service, ledit message comprenant la donnée d'alias, un montant de ladite transaction et l'identifiant dudit fournisseur de service auprès de la plateforme (2).

13. Procédé selon l'une des revendications 9 à 12 dans lequel le code de transaction est un code associé temporairement par le serveur (3) du fournisseur de service au montant de transaction ou un code identifiant un équipement susceptible de fournir le montant de transaction audit fournisseur de service.

14. Procédé selon l'une des revendications précédentes, dans lequel l'identifiant utilisateur est un identifiant associé à un module d'identification (5) d'utilisateur du terminal mobile (1).

15. Procédé selon l'une des revendications précédentes dans lequel la mise en relation est réalisée de manière sécurisée par l'intermédiaire d'un réseau privé virtuel (VPN) établi entre la plateforme (2) et le serveur (3) de fournisseur de service.

16. Procédé selon l'une des revendications précédentes, dans lequel l'étape de mémorisation (E0) comprend en outre préalablement une étape de réception par la plateforme (E01) d'un message d'inscription dudit fournisseur de service transmis par ledit serveur (3) du fournisseur de service et comprenant le code d'identification du fournisseur de service.

17. Procédé selon l'une des revendications précédentes, dans lequel l'étape de mémorisation (E0) comprend en outre préalablement une étape de réception par la plateforme (E03) d'un message d'inscription de l'utilisateur du terminal mobile transmis par le terminal mobile (1) et comprenant le code d'identification de l'utilisateur.

18. Procédé selon la revendication précédente, dans lequel l'étape de mémorisation (E0) comprend en outre préalablement une étape de réception par la plateforme (E03) d'un message d'inscription de l'utilisateur du terminal mobile (1) transmis par le terminal mobile (1) et comprenant le code d'authentification de l'utilisateur.

19. Système comprenant un terminal mobile (1) d'un utilisateur, un serveur (3) d'un fournisseur de service, une plateforme (2) servant d'intermédiaire entre le terminal mobile (1) et le serveur (3) et étant connectée au terminal mobile (1) via une plateforme d'accès (9) au réseau internet d'un réseau mobile (4) d'un opérateur, le système étant configuré pour mettre en œuvre le procédé selon l'une des revendications 1 à 18.

## Patentansprüche

1. Verfahren zur Sicherung einer Transaktion zwischen einem mobilen Endgerät (1) eines Benutzers und einem Server (3) eines Dienstleisters über eine Plattform (2), die mit dem mobilen Endgerät via eine Plattform für den Zugang (9) zum Internetnetz eines Mobilfunknetzes (4) eines Betreibers, mit dem Server (3) des Dienstleisters und mit einem Transaktionsausführungssystem (11) verbunden ist, wobei das Verfahren die folgenden Schritte beinhaltet:
- Erzeugen, durch die Plattform für den Zugang (9) zum Internetnetz des Mobilfunknetzes (4), eines Alias-Datenelements, das mit einer Benutzerkennung assoziiert ist, mittels derer das mobile Endgerät (1) gegenüber dem Mobilfunknetzwerk (4) des Betreibers in einer betreibereigenen Datenbank identifiziert ist, wobei die Plattform (2) die Benutzerkennung nicht kennt;
- Speichern (E0), durch die Plattform (2), einer Zuordnung zwischen einem Benutzeridentifikationscode gegenüber dem Transaktionsausführungssystem (11) und dem Alias-Datenelement,
- Herstellen einer Verbindung zwischen dem mobilen Endgerät (1) und der Plattform (2) über die Plattform für den Zugang (9) zum Internetnetz des Mobilfunknetzes (4) zum Internetnetz des Mobilfunknetzes (4),
- Empfangen (E1), durch die Plattform von der Plattform für den Zugang (9) zum Internetnetz des Mobilfunknetzes (4), des Alias-Datenelements während der Herstellung der Verbindung zwischen dem mobilen Endgerät (1) und der Plattform (2),
- Verknüpfen (E2), über die Plattform (2) und via die Plattform für den Zugang (9) zum Internetnetz des Mobilfunknetzes (4) zum Internetnetz des Mobilfunknetzes (4), des mobilen Endgeräts (1) des Benutzers mit dem Server (3) des Dienstleisters, wobei das Alias-Datenelement dazu dient, das mobile Endgerät (1) gegenüber dem Server (3) des Dienstleisters zu identifizieren, wobei die Zugangsplattform (9) die Benutzerkennung durch das Alias-Datenelement ersetzt, wenn das mobile Endgerät (1) mit dem Server (3) oder der Plattform (2) kommuniziert, und das mobile Endgerät (1) mittels der mit dem Alias-Datenelement assoziierten Benutzerkennung identifiziert, wenn der Server (3) oder die Plattform (2) mit dem Endgerät (1) kommuniziert,
- Empfangen (E3), durch die Plattform (2), von Transaktionsdaten, die für eine zwischen dem Benutzer des mobilen Endgeräts (1) und dem Dienstleister auszuführende Transaktion repräsentativ sind,
- Übertragen (E5), durch die Plattform (2) an das Transaktionsausführungssystem (11), eines Ausführungsauftrags für die Transaktion, der den Benutzeridentifikationscode und einen Identifikationscode des Dienstleisters gegenüber dem Transaktionsausführungssystem (11) beinhaltet, damit das Transaktionsausführungssystem (11) die Transaktion umsetzt.

2. Verfahren nach Anspruch 1, wobei das Alias-Datenelement eine anonymisierte, eindeutige und dauerhafte Kennung ist.

3. Verfahren nach einem der vorhergehenden Ansprüche, wobei der Schritt des Speicherns (E0) einer Zuordnung das Speichern, durch die Plattform, einer Zuordnung zwischen einer Kennung des Dienstleisters und dem Identifikationscode des Dienstleisters gegenüber dem Transaktionsausführungssystem (11) beinhaltet.

4. Verfahren nach Anspruch 3, wobei die Transaktionsdaten einen Transaktionscode beinhalten, der die auszuführende Transaktion gegenüber dem Dienstleister identifiziert.

5. Verfahren nach einem der vorhergehenden Ansprüche, wobei die Transaktionsdaten eine Identifikation mindestens eines durch den Dienstleiter zu liefernden Dienstes oder Produkts beinhalten.

6. Verfahren nach einem der vorhergehenden Ansprüche, wobei die Transaktionsdaten einen Transaktionsbetrag beinhalten.

7. Verfahren nach Anspruch 1, beinhaltend die folgenden Schritte:
- Speichern, durch die Plattform (E0), eines Benutzerauthentifizierungscodes zusammen mit dem Benutzeridentifikationscode,
- Übertragen, durch die Plattform (E41) an das mobile Endgerät (1), einer Anforderung zur Eingabe des Authentifizierungscodes,
- Empfangen, durch die Plattform (E42), eines durch den Benutzer eingegebenen Codes von dem mobilen Endgerät (1) und Vergleichen des eingegebenen Codes mit dem gespeicherten Authentifizierungscode,
- Übertragen, durch die Plattform (E5), des Ausführungsauftrags für die Transaktion, wenn der eingegebene Code und der gespeicherte Authentifizierungscode identisch sind.

8. Verfahren nach Anspruch 1, wobei der Schritt des Empfangens (E3) von Transaktionsdaten Folgendes beinhaltet:
- Empfangen, durch die Plattform (E311) von dem mobilen Endgerät (1), der Transaktionsdaten im Anschluss an eine mittels des mobilen Endgeräts (1) vorgenommenen Eingabe der Transaktionsdaten,
- Erzeugen, durch die Plattform (E312), des Ausführungsauftrags für die Transaktion anhand der empfangenen Transaktionsdaten und des Alias-Datenelements.

9. Verfahren nach Anspruch 4, wobei der Schritt des Empfangens (E3) der Transaktionsdaten Folgendes beinhaltet:
- Empfangen, durch die Plattform (E321) von dem mobilen Endgerät (1), des Transaktionscodes und
- Übertragen, durch die Plattform (E322) an den Server des Dienstleisters, des empfangenen Transaktionscodes im Anschluss an eine mittels des mobilen Endgeräts (1) vorgenommenen Eingabe des Transaktionscodes.

10. Verfahren nach Anspruch 9, wobei, während der Transaktionscode mit einem Betrag der Transaktion assoziiert ist, der Schritt des Empfangens (E3) von Transaktionsdaten im Anschluss an das Empfangen des Transaktionscodes das Zuordnen, durch die Plattform (E323), des Alias-Datenelements, des Betrags der Transaktion und der Kennung des Dienstleisters beinhaltet.

11. Verfahren nach dem vorhergehenden Anspruch, wobei der Schritt des Zuordnens vorab ferner die folgenden Schritte beinhaltet:
- Bestimmen, durch die Plattform (E32311), des Betrags der Transaktion, der dem empfangenen Transaktionscode entspricht;
- Übertragen, durch die Plattform (E32312) an das mobile Endgerät (1), einer Validierungsanfrage, die den Betrag der Transaktion, der dem empfangenen Transaktionscode entspricht, beinhaltet;
- Empfangen, durch die Plattform (E32313), einer Transaktionsvalidierungsnachricht, die durch das mobile Endgerät (1) übertragen wird, wobei die Nachricht das Alias-Datenelement, den Betrag der Transaktion und die Kennung des Dienstleisters gegenüber der Plattform (2) beinhaltet;
und wobei der Ausführungsauftrag für die Transaktion an das Transaktionsausführungssystem (11) übertragen wird, wenn die Validierungsnachricht von dem mobilen Endgerät (1) durch die Plattform (2) empfangen wird.

12. Verfahren nach Anspruch 10, wobei der Schritt des Zuordnens vorab ferner das Empfangen, durch die Plattform (E3232), einer Transaktionsanforderungsnachricht beinhaltet, die durch den Server (3) des Dienstleisters übertragen wird, wobei die Nachricht das Alias-Datenelement, einen Betrag der Transaktion und die Kennung des Dienstleisters gegenüber der Plattform (2) beinhaltet.

13. Verfahren nach einem der Ansprüche 9 bis 12, wobei der Transaktionscode ein Code ist, der durch den Server (3) des Dienstleisters vorübergehend mit dem Transaktionsbetrag assoziiert wird, oder ein Code ist, der eine Ausrüstung identifiziert, die dazu in der Lage ist, den Transaktionsbetrag an den Dienstleister zu liefern.

14. Verfahren nach einem der vorhergehenden Ansprüche, wobei die Benutzerkennung eine Kennung ist, die mit einem Benutzeridentifikationsmodul (5) des mobilen Endgeräts (1) assoziiert ist.

15. Verfahren nach einem der vorhergehenden Ansprüche, wobei das Verknüpfen über ein zwischen der Plattform (2) und dem Server (3) des Dienstleisters hergestelltes virtuelles privates Netz (VPN) auf gesicherte Weise durchgeführt wird.

16. Verfahren nach einem der vorhergehenden Ansprüche, wobei der Schritt des Speicherns (E0) vorab ferner einen Schritt des Empfangens, durch die Plattform (E01), einer Registrierungsnachricht des Dienstleisters beinhaltet, die durch den Server (3) des Dienstleisters übertragen wird und den Identifikationscode des Dienstleisters beinhaltet.

17. Verfahren nach einem der vorhergehenden Ansprüche, wobei der Schritt des Speicherns (E0) vorab ferner einen Schritt des Empfangens, durch die Plattform (E03), einer Registrierungsnachricht des Benutzers des mobilen Endgeräts beinhaltet, die durch das mobile Endgerät (1) übertragen wird und den Identifikationscode des Benutzers beinhaltet.

18. Verfahren nach dem vorhergehenden Anspruch, wobei der Schritt des Speicherns (E0) vorab ferner einen Schritt des Empfangens, durch die Plattform (E03), einer Registrierungsnachricht des Benutzers des mobilen Endgeräts (1) beinhaltet, die durch das mobile Endgerät (1) übertragen wird und den Authentifizierungscode des Benutzers beinhaltet.

19. System, beinhaltend ein mobiles Endgerät (1) eines Benutzers, einen Server (3) eines Dienstleisters, eine Plattform (2), die als Vermittler zwischen dem mobilen Endgerät (1) und dem Server (3) dient und mit dem mobilen Endgerät (1) via eine Plattform für den Zugang (9) zum Internetnetz eines Mobilfunknetzes (4) eines Betreibers verbunden ist, wobei das System dazu konfiguriert ist, das Verfahren nach einem der Ansprüche 1 bis 18 umzusetzen.

## Claims

1. Method for securing a transaction between a mobile terminal (1) of a user and a server (3) of a service provider by way of a platform (2) connected to the mobile terminal via an access platform (9) for accessing the Internet network of a mobile network (4) of an operator, to the server (3) of the service provider and to a transaction execution system (11), the method comprising the following steps:
- generation by said access platform (9) for accessing the Internet network of the mobile network (4) of an item of alias data associated with a user identifier by means of which the mobile terminal (1) is identified by the mobile network (4) of the operator in a database specific to the operator, the platform (2) having no knowledge of said user identifier;
- storage (E0) by the platform (2) of a correspondence between a user identification code at the transaction execution system (11) and the alias data,
- establishment of a connection between the mobile terminal (1) and the platform (2) by way of the access platform (9) for accessing the Internet network of the mobile network (4) to the Internet network of the mobile network (4),
- reception (E1) by the platform from the access platform (9) for accessing the Internet network of the mobile network (4) of the alias data during the establishment of the connection between the mobile terminal (1) and the platform (2),
- linking (E2), by way of the platform (2) and via the access platform (9) for accessing the Internet network of the mobile network (4) to the Internet network of the mobile network (4), the mobile terminal (1) of the user with the server (3) of the service provider, said alias data being used by said server (3) of the service provider to identify the mobile terminal (1), the access platform (9) replacing the user identifier with the alias data when the mobile terminal (1) communicates with the server (3) or the platform (2) and identifying, by means of the user identifier associated with the alias data, the mobile terminal (1) when the server (3) or the platform (2) communicates with the terminal (1),
- reception (E3) by the platform (2) of transaction data representative of a transaction to be executed between the user of the mobile terminal (1) and said service provider,
- transmission (E5) by the platform (2) to the transaction execution system (11) of an order to execute the transaction comprising said user identification code and an identification code of the service provider at the transaction execution system (11) such that the transaction execution system (11) implements said transaction.

2. Method according to Claim 1, wherein the alias data is an anonymized, unique and permanent identifier.

3. Method according to either of the preceding claims, wherein the step of storing (E0) a correspondence comprises storage by the platform of a correspondence between an identifier of the service provider and said identification code of the service provider at the transaction execution system (11).

4. Method according to Claim 3, wherein the transaction data comprise a transaction code which identifies the transaction to be executed by the service provider.

5. Method according to one of the preceding claims, wherein the transaction data comprise an identification of at least one service or product to be provided by the service provider.

6. Method according to one of the preceding claims, wherein the transaction data comprise a transaction amount.

7. Method according to Claim 1, comprising the following steps:
- storage by the platform (E0) of a user authentication code in association with the user identification code,
- transmission by the platform (E41) to the mobile terminal (1) of a request to input the authentication code,
- reception by the platform (E42) of a code from the mobile terminal (1) input by the user and comparison of the entered code with the stored authentication code,
- transmission by the platform (E5) of the transaction execution order when the entered code and the stored authentication code are identical.

8. Method according to Claim 1, wherein the step of receiving (E3) transaction data comprises:
- reception by the platform (E311) from the mobile terminal (1) of the transaction data following input of the transaction data performed by means of the mobile terminal (1),
- generation by the platform (E312) of said transaction execution order on the basis of said received transaction data and the alias data.

9. Method according to Claim 4, wherein the step of receiving (E3) the transaction data comprises:
- reception by the platform (E321) from the mobile terminal (1) of the transaction code, and
- transmission by the platform (E322) to the server of the service provider of the transaction code received following input of the transaction code performed by means of the mobile terminal (1).

10. Method according to Claim 9, wherein, with said transaction code being associated with an amount of the transaction, following reception of said transaction code, the step of receiving (E3) transaction data comprises matching by the platform (E323) of the alias data, the amount of the transaction and the identifier of said service provider.

11. Method according to the preceding claim, wherein the matching step further comprises the following steps beforehand:
- determination by the platform (E32311) of the amount of said transaction corresponding to the transaction code received;
- transmission by the platform (E32312) to the mobile terminal (1) of a validation request comprising the amount of said transaction corresponding to said received transaction code;
- reception by the platform (E32313) of a transaction validation message transmitted by the mobile terminal (1), said message comprising the alias data, the amount of said transaction and the identifier of said service provider at the platform (2);
and wherein the transaction execution order is transmitted to the transaction execution system (11) if the validation message from the mobile terminal (1) is received by the platform (2).

12. Method according to Claim 10, wherein the matching step further comprises, beforehand, reception by the platform (E3232) of a transaction request message transmitted by the server (3) of the service provider, said message comprising the alias data, an amount of said transaction and the identifier of said service provider at the platform (2).

13. Method according to one of Claims 9 to 12, wherein the transaction code is a code temporarily associated by the server (3) of the service provider with the transaction amount or a code identifying an equipment capable of providing the transaction amount to said service provider.

14. Method according to one of the preceding claims, wherein the user identifier is an identifier associated with a user identification module (5) of the mobile terminal (1).

15. Method according to one of the preceding claims, wherein the linking is carried out securely by way of a virtual private network (VPN) established between the platform (2) and the service provider server (3).

16. Method according to one of the preceding claims, wherein the storage step (E0) further comprises, beforehand, a step of reception by the platform (E01) of a registration message of said service provider transmitted by said server (3) of the service provider and comprising the identification code of the service provider.

17. Method according to one of the preceding claims, wherein the storage step (E0) further comprises, beforehand, a step of reception by the platform (E03) of a registration message of the user of the mobile terminal transmitted by the mobile terminal (1) and comprising the identification code of the user.

18. Method according to the preceding claim, wherein the storage step (E0) further comprises, beforehand, a step of reception by the platform (E03) of a registration message of the user of the mobile terminal (1) transmitted by the mobile terminal (1) and comprising the authentication code of the user.

19. System comprising a mobile terminal (1) of a user, a server (3) of a service provider, a platform (2) serving as an intermediary between the mobile terminal (1) and the server (3) and being connected to the mobile terminal (1) via an access platform (9) for accessing the Internet network of a mobile network (4) of an operator, the system being configured to implement the method according to one of Claims 1 to 18.
